# EUROPÄISCHE PATENTSCHRIFT

(11) **EP 0 801 523 B1**
(45) Veröffentlichungstag und Bekanntmachung des Hinweises auf die Patenterteilung: **13.12.2000**
(21) Anmeldenummer: 96945699.5
(22) Anmeldetag: 30.10.1996
(51) Int. Cl.: A01C 9/02

(54) **LEGEMASCHINE**
PLANTING MACHINE
PLANTEUSE

(30) Priorität: 08.11.1995 DE 19541552
(43) Veröffentlichungstag der Anmeldung: 22.10.1997
(73) Patentinhaber: Netagco Holding B.V., 8211 AJ Lelystad (NL)
(72) Erfinder: LINK, Alfred, D-35510 Butzbach (DE)
(74) Vertreter: Schlagwein, Udo, Dipl.-Ing.
(86) Internationale Anmeldenummer: DE9602061
(87) Internationale Veröffentlichungsnummer: WO9716952

(56) Entgegenhaltungen:
- DE-B- 2 548 359
- DE-C- 487 674
- FR-A- 2 269 850

## Beschreibung

Die Erfindung betrifft ein Legemaschine, insbesondere zum Legen von Kartoffeln, welche ein von einer oberen Umlenkrolle und unteren Umlenkrolle umgelenktes endloses Band mit einzelnen Schöpfbechern hat.

Eine solche Legemaschine ist beispielsweise in der DE-B-25 48 359 als Kartoffellegemaschine beschrieben. Die Schrift befaßt sich mit dem Problem der Mehrfachbelegung von Schöpfbechern. In der Praxis kommt es beim Pflanzen von Kartoffeln oftmals zu Fehlstellen, weil einzelne Schöpfbecher schon beim Schöpfen leer blieben oder weil auf ihnen liegendes Legegut wieder heruntergeschüttelt wurde. Eine mangelnde Belegung von Schöpfbechern wird insbesondere durch Verschmutzung der Schöpfbecher verursacht, weil sich Keime oder Schmutz in den Schöpfmulden der Schöpfbecher sammeln und diese verkleinern oder gar zusetzen können, so daß das Schöpfgut nicht mehr in ihnen gehalten werden kann. Der Pflanzvorgang muß dann unterbrochen werden, um die einzelnen Schöpfbecher des Schöpfbecherbandes zu reinigen, was sehr zeitaufwendig ist und eine unangenehme Arbeit darstellt.

Der Erfindung liegt das Problem zugrunde, eine Legemaschine der eingangs genannten Art so zu gestalten, daß auch bei längerem Dauereinsatz ein zuverlässiges Schöpfen von Legegut sichergestellt und ein unbeabsichtigtes Herausfallen des Legegutes aus den Schöpfbechern vermieden wird.

Dieses Problem wird erfindungsgemäß dadurch gelöst, daß im Bereich der unteren Umlenkrolle eine Bürstenanordnung mit über die Oberseite der Schöpfbecher streichenden Borsten angeordnet ist.

Durch eine solche Bürstenanordnung wird erreicht, daß die Oberseite der einzelnen Schöpfbecher bei jedem Umlauf des Schöpfbecherbandes einmal abgebürstet wird. Dadurch läßt sich ausschließen, daß sich in den Schöpfbecher im Laufe der Zeit Schmutz oder Keime sammeln und es zu Störungen des Schöpfvorganges oder zu einem unbeabsichtigten Abfallen von Schöpfgut während des Aufwärtstransportes durch die Schöpfbecher kommt. Da das Abbürsten ständig erfolgt, sind die jeweils abzubürstenden Schmutzmengen gering, so daß die Bürstenanordnung einfach gestaltet sein kann.

Ein besonders gründliches Reinigen der Schöpfbecher ist möglich, wenn gemäß einer vorteilhaften Weiterbildung der Erfindung die Bürstenanordnung durch eine mit radial ausgerichteten Borsten versehene, parallel zur unteren Umlenkrolle angeordnete und im gleichen Drehsinn wie die untere Umlenkrolle angetriebene Walze gebildet ist.

Eine weitere Verbesserung des Reinigungsergebnisses läßt sich ohne aufwendige Gestaltung der Bürstenanordnung erreichen, wenn gemäß einer anderen Weiterbildung der Erfindung die Schöpfbecher über ihre Breite mehrere, zu ihrem freien Ende hin offene Schlitze aufweisen.

Statt eine angetriebene Bürstenanordnung vorzusehen, ist es auch möglich, daß die Bürstenanordnung durch einen feststehenden Borstenträger mit gegen die Schöpfbecher gerichteten Borsten gebildet ist. Eine solche Ausführungsform ist ganz besonders kostengünstig zu verwirklichen.

Die Borsten der Bürstenanordnung werden bei jedem Abbürstvorgang nur relativ gering elastisch verformt, so daß die Abbürstanordnung eine besonders lange Lebensdauer hat, wenn der Borstenträger entsprechend der Zahl der Schlitze in den Schöpfbechern nebeneinander mehrere aufgefächerte Borstenbüschel aufweist.

Die Erfindung läßt verschiedene Ausführungsformen zu. Zur weiteren Verdeutlichung ihres Grundprinzips sind zwei davon in der Zeichnung dargestellt und werden nachfolgend beschrieben. Diese zeigt in
- Fig. 1: einen Längsschnitt durch eine Legemaschine mit der erfindungsgemäßen Bürstenanordnung,
- Fig.2: einen der Fig.1 entsprechenden Schnitt durch einen unteren Bereich eines Schöpfbecherbandes mit einer zweiten Ausführungsform einer Bürstenanordnung,
- Fig.3: einen horizontalen Schnitt durch die Anordnun nach Figur 2 entlang der Linie II - II.

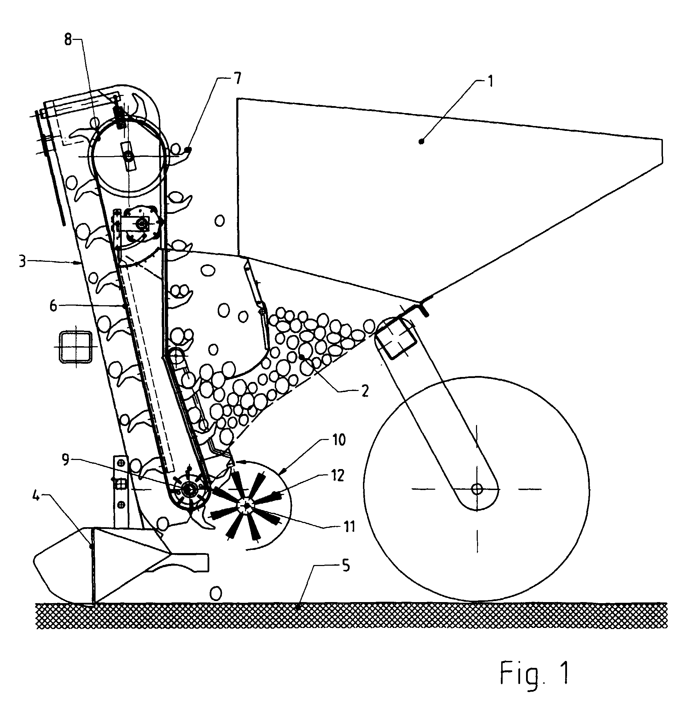

Die in Figur 1 gezeigte Legemaschine hat einen Vorratsbehälter 1 mit Legegut 2, bei dem es sich bei diesem Ausführungsbeispiel um Pflanzkartoffeln handelt. Dieses Legegut 2 wird mittels eines an der Vorderseite des Vorratsbehälters 1 angeordneten Schöpfbecherbandes 3 dem Vorratsbehälter 1 nach oben hin entnommen und vereinzelt nach unten transportiert, so daß es hinter einem Furchenzieher 4 auf den Acker 5 fallen kann.

Das Schöpfbecherband 3 hat ein endloses Band 6 mit zwei Reihen von Schöpfbechern 7 und wird von einer oberen Umlenkrolle 8 und einer unteren Umlenkrolle 9 umgelenkt. Wichtig für die Erfindung ist eine Bürstenanordnung 10.

Bei dem Ausführungsbeispiel nach Figur 1 besteht diese aus einer Walze 11 mit radial ausgerichteten, büschelförmig angeordneten Borsten 12. Diese Walze 11 ist parallel zur unteren Umlenkrolle 9 in unmittelbarer Nähe zu ihr angeordnet und auf nicht gezeigte Weise im gleichen Drehsinn wie die untere Umlenkrolle 9 angetrieben. Die einzelnen Schöpfbecher 7 gelangen deshalb bei ihrer Umlaufbewegung mit ihrer Oberseite gegen die Borsten 12 der Bürstenanordnung 10 und werden dadurch gereinigt.

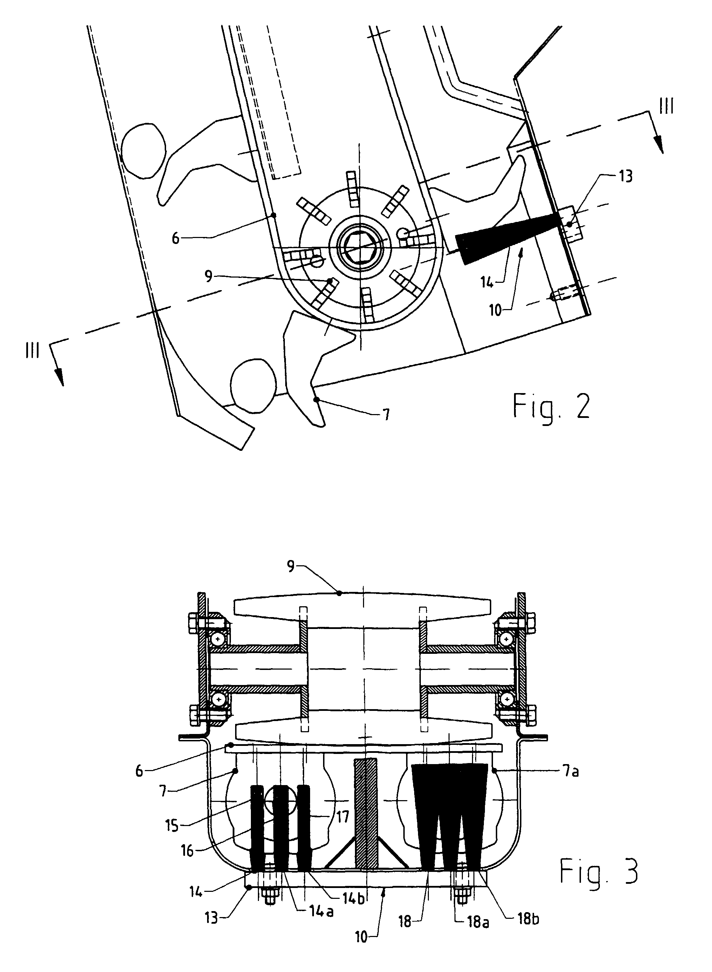

Bei der Ausführungsform nach Figur 2 hat die Bürstenanordnung 10 einen leistenförmigen, feststehenden Borstenträger 13 mit Borstenbüscheln 14. Diese ragen in die Bewegungsbahn der Schöpfbecher 7, so daß ihre Oberseite bei jedem Durchgang gereinigt wird.

Die Figur 3 läßt erkennen, daß das Band 6 zwei Reihen von Schöpfbechern 7, 7a hat. Diese weisen jeweils drei zu ihrem freien Ende hin offene Schlitze 15, 16, 17 auf. Entsprechend diesen Schlitzen 15, 16, 17 hat der Borstenträger 13 zwei Gruppen von Borstenbüscheln 14, 14a, 14b und 18, 18a, 18b. Die rechte Gruppe von Borstenbüscheln 18, 18a, 18b ist im entspannten, aufgefächerten Zustand dargestellt, in welchem der Schöpfbecher 7a die Borstenbüschel 18, 18a, 18b noch nicht berührt. Steigt der Schöpfbecher 7a weiter nach oben, dann ziehen sich die Borstenbüschel 18, 18a und 18b zusammen und vermögen, was in linken Bildteil für die Borstenbüschel 14, 14a und 14b gezeigt ist, die Schlitze 15, 16, 17 zu passieren.

### Bezugszeichenliste

- 1: Vorratsbehälter
- 2: Legegut
- 3: Schöpfbecherband
- 4: Furchenzieher
- 5: Acker

- 6: Band
- 7: Schöpfbecher
- 8: obere Umlenkrolle
- 9: untere Umlenkrolle
- 10: Bürstenanordnung

- 11: Walze
- 12: Borsten
- 13: Borstenträger
- 14: Borstenbüschel
- 15: Schlitz

- 16: Schlitz
- 17: Schlitz
- 18: Borstenbüschel

## Patentansprüche

1. Legemaschine, insbesondere zum Legen von Kartoffeln, welche ein von einer oberen Umlenkrolle und unteren Umlenkrolle umgelenktes endloses Band mit einzelnen Schöpfbechern hat, **dadurch gekennzeichnet**, daß im Bereich der unteren Umlenkrolle (9) eine Bürstenanordnung (10) mit über die Oberseite der Schöpfbecher (7) streichenden Borsten (12) angeordnet ist.

2. Legemaschine nach Anspruch 1, **dadurch gekennzeichnet**, daß die Bürstenanordnung (10) durch eine mit radial ausgerichteten Borsten (12) versehene, parallel zur unteren Umlenkrolle (9) angeordnete und im gleichen Drehsinn wie die untere Umlenkrolle (9) angetriebene Walze (11) gebildet ist.

3. Legemaschine nach Anspruch 2, **dadurch gekennzeichnet**, daß die Schöpfbecher (7) über ihre Breite mehrere, zu ihrem freien Ende hin offene Schlitze (15, 16, 17) aufweisen.

4. Legemaschine nach zumindest einem der vorangehenden Ansprüche, **dadurch gekennzeichnet**, daß die Bürstenanordnung (10) durch einen feststehenden Borstenträger (13) mit gegen die Schöpfbecher (7) gerichteten Borstenbüscheln (14, 18) gebildet ist.

5. Legemaschine nach zumindest einem der vorangehenden Ansprüche, **dadurch gekennzeichnet**, daß der Borstenträger (13) entsprechend der Zahl der Schlitze (15, 16, 17) in den Schöpfbechern (7) nebeneinander mehrere aufgefächerte Borstenbüschel (14, 14a, 14b; 18, 18a, 18b) aufweist.

## Claims

1. Planting machine, especially for planting potatoes, which has an endless belt with individual scoops running around an upper pulley and a lower pulley, characterized in that a brush arrangement (10) with bristles (12) sweeping over the top of the scoops (7) is arranged in the region of the lower belt pulley (9).

2. Planting machine according to Claim 1, characterized in that the brush arrangement (10) is formed by a roller (11) which is provided with radially orientated bristles (12) and is arranged parallel with, and driven in the same direction of rotation as, the lower belt pulley (9).

3. Planting machine according to Claim 2, characterized in that each scoop (7) has a number of slits (15, 16, 17) arranged over the width of the scoop and open at its free end.

4. Planting machine according to at least one of the preceding claims, characterized in that the brush arrangement (10) is formed by a stationary bristle-holder (13) with bristle tufts (14, 18) directed towards the scoops (7).

5. Planting machine according to at least one of the preceding claims, characterized in that the bristle-holder (13) has a number of bristle tufts arranged side by side (14, 14a, 14b; 18, 18a, 18b) corresponding to the number of slits (15, 16, 17) in the scoops (7).

## Revendications

1. Machine à planter, en particulier pour planter les pommes de terre, qui comprend une bande sans fin renvoyée par un rouleau de renvoi supérieur et un rouleau de renvoi inférieur et munie de godets-écopes individuels, caractérisée en ce que, dans la région du rouleau de renvoi inférieur (9), est agencé un dispositif à brosses (10) muni de soies (12) qui brossent sur la surface supérieure des godets-écopes (7).

2. Machine à planter selon la revendication 1, caractérisée en ce que le dispositif à brosses (10) est formé d'un cylindre (11) muni de soies (12) dirigées radialement et qui est disposé parallèlement au rouleau de renvoi inférieur (9) et est entraîné dans le même sens de rotation que le rouleau de renvoi inférieur (9).

3. Machine à planter selon la revendication 2, caractérisée en ce que les godets-écopes (7) présentent sur leur largeur plusieurs fentes (15, 16, 17) qui s'ouvrent vers leur extrémité libre.

4. Machine à planter selon au moins une des revendications précédentes, caractérisée en ce que le dispositif à brosses (10) est formé d'un support de soies fixe (13) muni de touffes de soies (14, 18) dirigées vers les godets-écopes (7).

5. Machine à planter selon au moins une des revendications précédentes, caractérisée en ce que le support de soies (13) présente des touffes de soies ébouriffées (14, 14a, 14b ; 18, 18a, 18b) juxtaposées, qui correspondent au nombre des fentes (15, 16, 17) des godets-écopes (7).
